# EUROPEAN PATENT SPECIFICATION

(11) **EP 1 531 038 B1**
(45) Date of publication and mention of the grant of the patent: **15.07.2015**
(21) Application number: 04026729.6
(22) Date of filing: 10.11.2004
(51) Int. Cl.: A43D 35/00, A43B 13/18, B29D 35/00, B29C 44/04, B29D 35/12, A43B 13/04

(54) **Method for manufacturing sole elements**
Verfahren zur Herstellung von Schuhsohlen
Méthode de fabrication de semelles de chaussures

(30) Priority: 11.11.2003 DE 10352658
(43) Date of publication of application: 18.05.2005
(73) Proprietor: adidas International Marketing B.V., 1062 KR Amsterdam (NL)
(72) Inventor: Norton, Daniel Eugene, King of Prussia, PA 19406 (US)
(74) Representative: Hess, Peter K. G.

(56) References cited:
- EP-A- 1 281 506
- GB-A- 1 145 970
- JP-A- 9 023 904
- US-A- 2 099 418
- US-A- 3 766 669
- US-A- 4 372 059
- US-A- 4 864 739

## Description

### 1. Technical field

The present invention relates to sole elements for shoes and methods for their manufacture. The present invention relates in particular to sole elements for shoes having a desired density distribution in transversal and / or other directions.

### 2. Background of the invention

It is generally known in the prior art that injuries may arise if the moving parts of the body are subjected to high stress during walking or running. Such injuries arise in particular with sports requiring a great amount of movement. This applies for both, contact sports, as for example soccer, and non-contact sports, as for example running or jogging.

In particular long distance runners are often concerned with injuries or stress to the moving parts of their body which reduce the performance and which may even lead to the inability to further carry out this sport. The most serious injuries are injuries to the knee or injuries to the cartilage. Such injuries arise often due to the turning movement which accompanies the gait cycle, when the foot contacts the ground and pushes off from the ground. Two types of turning movements, which are considered as being dangerous are distinguished, pronation and supination. Both lead often to injuries of the knee. Pronation is a rotation or turning of the foot from the lateral side of the foot to the medial side of the foot. During the gait cycle the foot typically contacts the ground at first with the outer part of the heel. The weight is then shifted to the forefoot part to start the pushing-off. During this pushing-off phase pronation starts, i.e. turning the foot to its medial side. Supination is a corresponding turning of the foot from the medial, i.e. the inner side to the lateral, i.e. the outer side of the foot.

To meet the above mentioned problems, several approaches have been suggested in the prior art. The US-A-4 615 126 describes for example a sole unit, in particular for sports shoes, with segments in the forefoot part at the third to fifth metatarsal-phalangeal joints of the foot having an increased flexibility in comparison to the remaining part of the sole unit. Such a configuration reduces the resistance of the sole unit with respect to the bending of the foot along the third to fifth metatarsal-phalangeal joints whereby tensions in the respective muscles are reduced and a pushing-off movement in particular by the first and second metatarsal-phalangeal joints of the foot is achieved. The provision of the more flexible part in the forefoot part leads to a reduction of the pronation or supination movement.

A further solution is known from the US-A-5 025 573, which discloses a sole unit in particular for sport shoes with different parts made out of substances with different elastic properties. The described sole unit consists of two layers, i.e. a lower layer of a firm material (which may also serve as the outsole) and an upper, softer layer. The lower layer has an increased thickness in the heel part and in the part of the arch which serves as a stabilizing surface for the foot. The superposed softer damping layer is complementary formed to the lower firmer layer and to the foot, wherein its thickness varies in dependence of the transversal position.

A further solution is for example described in the WO 95/03719. According to this approach, pronation is counteracted by inserting a wedge-like element into the heel part of the sole unit, the wedge-like element being on the lower side in contact with the outsole. The wedge-like element comprises upper and lower layers of a composite material of carbon fibers with a springy core material in between. The wedge-like element tapers from the medial to the lateral side and from the heel to the mid-foot area. In other words, the wedge-like elements tapers in two directions.

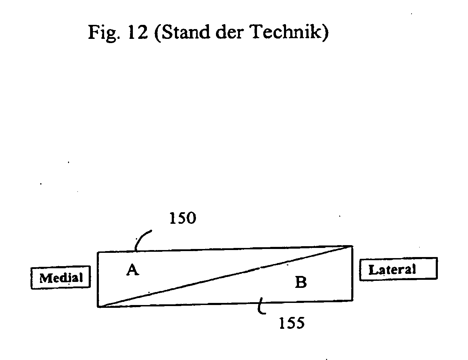

US Patent No. 4,642,911 discloses a sole construction which is to be further described with reference to Fig. 12. In particular, the 911 patent discloses a sole unit which is suggested to control pronation by consisting of a material with a dual density. To this end the sole unit is made out of two different materials A and B, where the material A has a higher density compared to that of material B. Fig. 12 depicts in cross-section such a sole unit, including two wedge-like elements 150 and 155 which may be glued or melted to each other. The '911 patent describes that the formation of the wedge-like element 150 as a material of higher density causes a continuous decrease of the density of the sole unit from the medial side to the lateral side leading to a support of the medial side of the foot. On the other hand, the '911 patent further describes that the wedge 150 with the material of higher density may be arranged on the lateral side of the sole unit for a control of supination movement.

The US patent 4,864,739 discloses an inside boot sole, comprising separate support zones distributed under the surface of the foot.

The US patent 3,766,669 relates to a flexible polyvinylchloride foam member with a permanent profile or shape by use of compressive pressure and radio frequency heating. The resulting article has a higher concentration of smaller foam cells in a portion of higher density than in a portion of lower density.

The US patent 2,099,418 relates to a shoe with a sole having rubber of greater density at the places where weight is concentrated. This is accomplished by providing increased thickness of the rubber at the places where the increased density is required.

The EP 1 281 506 relates to a method for moulding a sole, wherein a sequence of pressing phases is applied, which results in the formation of inner and an outer layer with different densities.

The US patent 4,372,059 is related to a shoe sole with a deformable middle segment.

Finally, JP 90 23 904 discloses a mold of thermoplastic elastic foam with a thickness decreasing from a lateral part to an inner portion of a sole to be formed. When compressing the mold in a uniform compression equipment, the portion equivalent to the inner portion obtains a lower density than the portion corresponding to the lateral part. Thus, a sole is obtained whose compressibility is increasing gradually towards the inner portion from the lateral part.

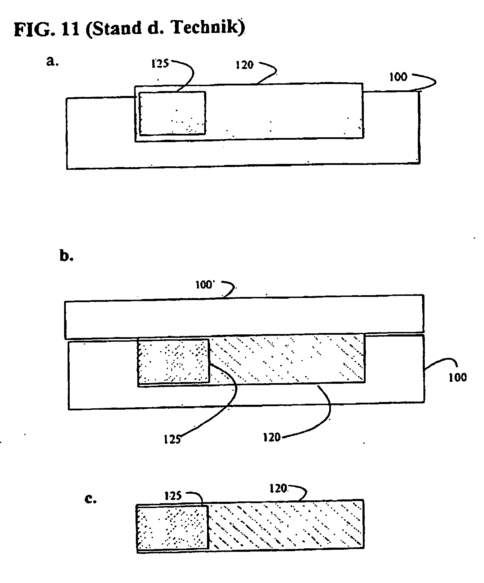

In the following, a manufacturing method for sole units according to the prior art is discussed, comprising parts with different densities. Reference is made to Fig. 11. Here, a tool 100 is filled with a plastic material 120 to be formed having a certain first density. The block of material 120 may comprise in a desired part a second material of higher density 125. In Fig. 11 the second material 125 is shown as being embedded into the first material 120. Alternatively, it is also possible to position two different blocks 120, 125 separately into the tool. Finally the tool 100 is closed by positioning a second half of the tool 100' onto the first half of the tool.

Subsequently the sole unit is formed into its desired shape according to the tool from the material blocks 120 and 125 (which are also called preform) by the application of pressure and heat.

The above mentioned techniques, however, have the severe disadvantage that two different materials of different densities are at first formed and subsequently connected to each other for achieving the desired density variation over the transversal area of the sole unit. This requires not only increased manual efforts but also leads to interconnection problems, since the two materials with different densities have to be compatible to each other. Furthermore it has to be taken into account that shoes, in particular sport shoes, are mass products which are produced by machines.

For this reason, the complex forming of two materials which are to be interconnected for achieving a desired density variation is only possible with a high expenditure.

### 3. Summary of the invention

The present invention is therefore based on the problem to provide a sole unit for shoes and in particular for sport shoes which can be produced in a simple and therefore convenient way concerning the production technology and which allow on the other hand an arbitrary density variation in transversal and other directions over the complete area of the sole element.

According to the invention, this problem is solved by a method for the manufacture of sole elements according to claim 1. The core of the present invention is the concept to achieve the density variation over the sole element by using a preform made of a single material and having a thickness distribution which is transformed into the desired density distribution by pressure forming. This is in contrast to prior art methods, which use two different materials with different densities, which are subsequently interconnected.

The advantage of the inventive concept is that all subsequent problems of the interconnection of different sole elements are no longer present. The complete sole element is finished in a single production step. Since the resulting density variation is correlated only to the geometrical dimensions of the preform, any variation of the density and therefore of the elastic properties over the complete area of the sole unit can be achieved without the complementary formation of two material layers.

According to the invention, the sole unit has a density which increases gradually from the lateral to the medial side for the control of pronation. In an example, which is not in all aspects in accordance with the invention, a respectively reversed density distribution can be used for the control of supination.

The preferred embodiment according to claim 2 describes variations in the density distribution not only from the lateral to the medial side or vice versa but also from the heel part to the forefoot part. Sole elements manufactured with such a method can be adapted to different sports and to the different anatomy of the respective wearer.

The preferred embodiment according to claim 5 relates to a sole unit having a border part with a constant density in the lateral and medial side part for an additional support of the foot.

The preferred embodiment according to claims 6 and 7 relates to the manufacture of the preform of the sole element. According to a preferred embodiment the preform, which comprises preferably EVA, is at first expanded to a quadrant-shaped block which is subsequently cut into pieces with the respective desired varying thickness. The cut preforms with varying thickness are then formed into the sole element. A particular preferred embodiment is obtained, if the preform is not produced at first as a quadrant-shaped block but directly with the corresponding thickness modulation. This can for example be achieved by producing the preform by injection moulding.

### 4. Short description of the drawings

In the following, presently preferred embodiments of the present inventions are discussed with reference to the drawings, which show:
- Fig. 1: a top view of a skeleton of a human foot;
- Fig. 2a: a section along the metatarsals of Fig. 1 of a foot showing pronation;
- Fig. 2b: a section along the metatarsals of Fig. 1 of a foot showing supination;
- Fig. 3a: a preform according to the invention for the manufacture of a sole element;
- Fig. 3b: a longitudinal section through the preform of Fig. 3a along the line A-A;
- Fig. 4a: a perspective view of a sole element according to the invention having a locally varying density distribution;
- Fig. 4b: a section through the sole unit according to the invention of Fig. 4a along the line A-A;
- Fig. 5a - c: a sole unit according to the invention with a varying density distribution not only from the lateral to the medial side but also from the rearfoot part to the forefoot part;
- Fig. 6: a preform according to the invention with a first preferred profile;
- Fig. 7: a preform according to the invention with a second preferred profile;
- Fig. 8: a preform according to the invention with a third preferred profile;
- Fig. 9: a preform according to the invention with a fourth preferred profile;
- Fig. 10: a cross-section of a tool according to the invention for the manufacture of sole elements according to the invention;
- Fig. 11: a drawing of a known forming tool for the discussion of the prior art; and
- Fig. 12: a sole element according to the prior art.

### 5. Detailed description of preferred embodiments

In the following description of preferred embodiments of the present invention reference is made to a sole element. It has, however, to be noted that the sole element according to the invention is typically used as part of a sole ensemble. That is, the sole element according to the invention is typically formed as a midsole wherein additionally an outsole and an insole for improving the comfort is provided. Furthermore, it is not necessary that the sole element extends in longitudinal direction (i.e. from the heel to the forefoot part) over the complete sole. It is also possible that the sole element according to the invention is only used in the heel part or in parts of the forefoot.

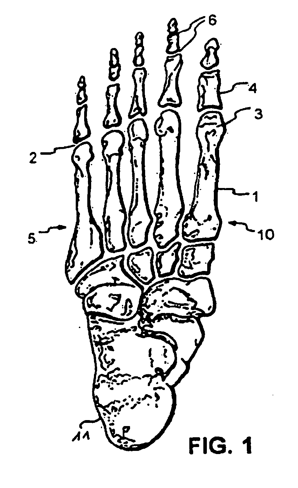

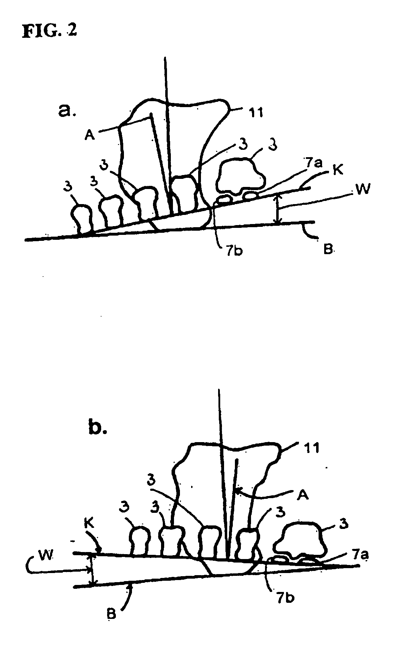

In the following, the human anatomy of the foot is discussed with reference to Fig. 1 and 2 to clarify the function of the sole element according to the invention for the control of pronation and supination. Fig. 1 is a top view of a left human foot. It shows the calcaneus 11 and the subsequent metatarsals 3. In the direction of the forefoot part they are followed by the phalangeals 4 which are connected to the metatarsals 3 by metatarsal-phalangeal joints 2. The bones of the toe 6 are interconnected by inter-phalangeal joints 6. Further, the medial side 10 and the lateral side 5 of the foot is shown.

Fig. 2a depicts the foot of a runner experiencing pronation movement, just as the foot first contacts the ground. In particular, the metatarsal bones 3 are aligned along a line K forming on a planar surface an angle W with the ground B. The heel bone 11 and the fifth metatarsal bone 3 (leading to the small toe) contact the ground. In pronation movement of the foot, as a runner goes through his gait cycle, he shifts his weight so that the remaining metatarsal bones subsequently come into ground contact, turning his foot from the lateral to the medial side in the process.

Depending on the angle W, a substantial pronation movement may arise leading to the already discussed danger of injuries, in particular to the knee, where the tibial and the fibular sesamoid bones 7A and 7B form a receiving position.

Fig. 2b depicts at the beginning of ground contact a foot experiencing the equally undesired supination movement. As can be seen, in this situation the first metatarsal 3 (leading to the big toe) contacts the ground first, following which the runner shifts his weight causing the remaining metatarsals to contact the ground. This leads to a turning movement of the foot from the inside to the outside.

It is the object of the present invention to compensate the above described pronation movement and the more rarely arising supination movement by providing the parts of the sole which are below the parts of the foot "being in the air" with an increased density and thereby with a reduced elasticity.

It is known from the prior art to manufacture soles or parts of soles from expanded plastics for example of polyurethane (PU). To this end, the plastic material to be expanded is at first expanded into blocks which are subsequently cut into single preforms (so-called blockers). These blockers are inserted into a forming tool and subsequently formed into the desired shape of the sole element by the application of pressure and heat. The sole element produced in such a way can either have a constant thickness over the area of the foot or, if needed, also be formed with a footbed. It was, however, a common feature of the preforms known in the prior art to have either a constant thickness (if the sole element to be produced had a constant thickness) or a variation of the thickness corresponding to the variation of the thickness of the sole to be produced. The present invention, on the contrary, is based on a first preferred embodiment of preforms having a thickness modulation in transversal direction corresponding to the density distribution which is later to be obtained.

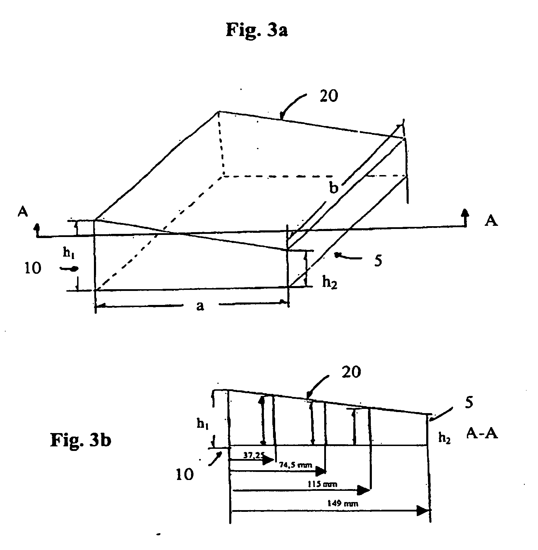

For the discussion it is at first referred to the preferred preform according to the invention as shown in Fig. 3. This preform is preferably made from EVA. However, other foamed materials are also conceivable such as polyurethane (PU). In Fig. 3a a perspective view of a preferred preform 20 is shown having preferably a width of 149 mm, a length b of 250 mm and a continuously decreasing height h from the left to the right side. In Fig. 3b a longitudinal section through the preform 20 along the line A-A of Fig. 3 a is shown. For the illustration of the principle several heights h; are shown with reference to their distance from the left side 10 of the preform 20, wherein six arbitrary selected measurement points are shown. For the control of pronation, the left side 10 of the preform 20 corresponds later to the medial side of the sole element.

The corresponding dimensions can be taken from the following table, where the constant hardness of the preform is 40 C (Shore C):

**Table 1:**

| **Preform dimensions from the medial to the lateral border in the first preferred embodiment** | |
|---|---|
| **DISTANCE FROM THE MEDIAL SIDE** **[MM]** | **THICKNESS OF THE PREFORM** **[MM U. %]** |
| 0 | 25,0 (192 %) |
| 37,25 | 22,5 (173 %) |
| 74,50 | 20,0 (154 %) |
| 115,00 | 17,5 (135 %) |
| 149,00 | 15,0 (115 %) |

It can be derived from the table that the preform has at its left medial side 10 a height of 25 mm. This corresponds to 192 % of the height of the end-formed sole element (see below). At the outermost right side 5 (the lateral side) the preform has a thickness of 15 mm, which corresponds to 115 % of the final thickness of the sole element.

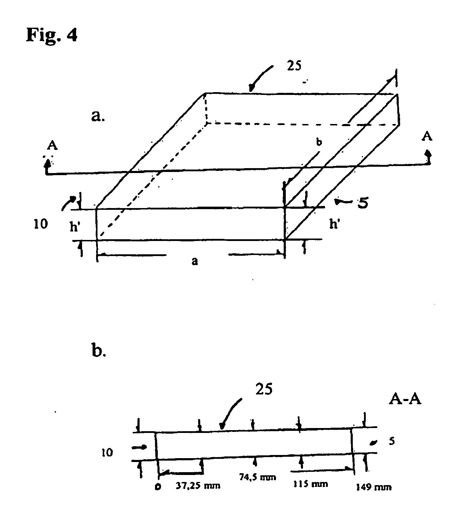

If such a preform 20 is formed in a known forming tool (which is not discussed in detail) the sole element 25, as shown in Fig. 4, is obtained.

As can be derived from Fig. 4a, the sole element 25 has a width of a = 149 mm, a length b of 250 mm and a constant height h' of 13 mm. Fig. 4b shows again a longitudinal section through the finished sole element 25 according to the invention. If the hardness of the resulting sole element 25 is measured with reference to the distance from the medial side 10 the following values, shown in table 2, are obtained:

**Table 2:**

| **Hardness distribution of the shaped sole unit from the medial 10 to the lateral side 5 in the first preferred embodiment** | |
|---|---|
| **DISTANCE FROM THE MEDIAL SIDE [MM]** | **HARDNESS [C]** |
| 0 | 60,0 |
| 37,25 | 57,5 |
| 74,50 | 55,0 |
| 115,0 | 52,5 |
| 149,0 | 50,0 |

As can be seen, the hardness (measured in Shore C) decreases from 60 C to 50 C. Therefore a reduction by 10 C is obtained, if the preform 20 described in table 1 and consisting of polyurethane is taken as a basis.

The local variance in hardness of the sole unit 25 can be explained by the surplus of material on the medial side 10 which is compressed during the final forming step in such a way that a continuously varying density distribution is obtained in the sole unit 25. The resulting density in turn influences the hardness and therefore the elasticity of the sole unit.

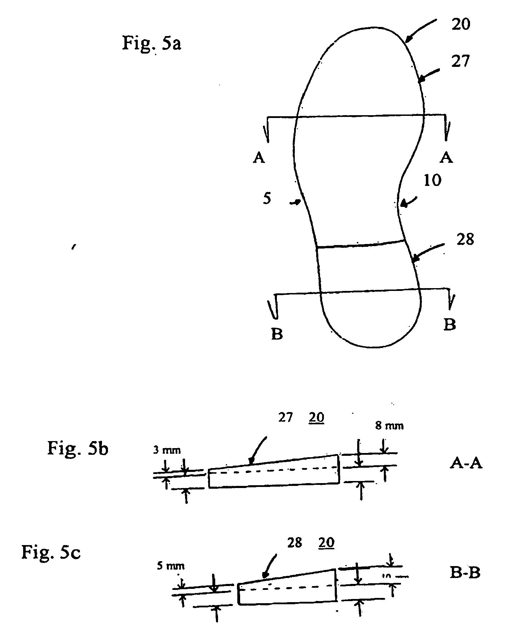

Figs. 5a - c show a further preferred embodiment of the preform 20 according to the invention. This preform 20 having already the shape of a sole has the special feature that the height does not only vary from the medial side 10 to the lateral side 5 but also from the rear foot part 28 to the forefoot part 27. The sections along the line A-A (Fig. 5b) and the line B-B (Fig. 5c) show that the height in the forefoot area 27 is 8 mm on the medial side and 3 mm on the lateral side, whereas in the rear foot part the height is 10 mm on the medial side and 5 mm on the lateral side. With such a preform 20 a modulation of the density and therefore of the hardness is not only obtained from the medial to the lateral side but also from the rear foot part 28 to the forefoot part 27.

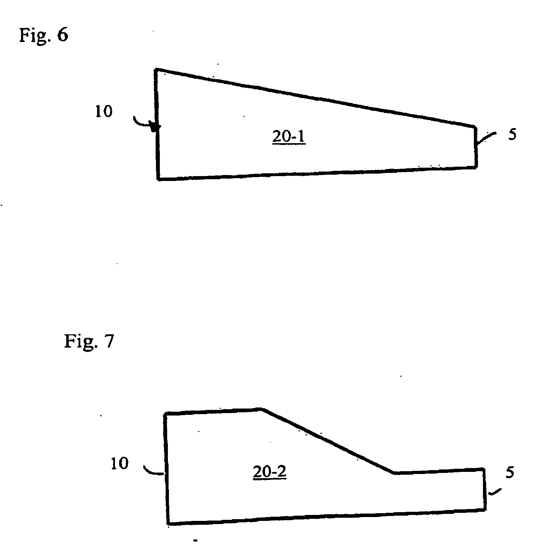

In the following, several preferred embodiments 20-1 to 20-4 of preferred preforms are described with reference to the Fig. 6 to 9.

The preform 20-1 shown in Fig. 6 corresponds to the preform 20 discussed and shown in Fig. 3. Such preforms have the advantage that they can be easily cut from a larger block of preformed plastic material for a subsequent end-forming. The preferred embodiment shown in Fig. 7 compensates an unwanted effect which counteracts the density distribution during forming of the sole according to the invention from the medial side 10 to the lateral side 5. Since the preform 20-2 is not only pressed in the forming tool but also heated, it changes over into a fluid-like viscous condition. Since the material has a higher density in the part of the medial side 10, it has naturally the tendency to flow to the lateral side 5 thereby counteracting the desired density profile. For this reason not only on the medial side 10 but also on the lateral side 5 a plateau area is provided which serves as a "buffer" for the flow of material.

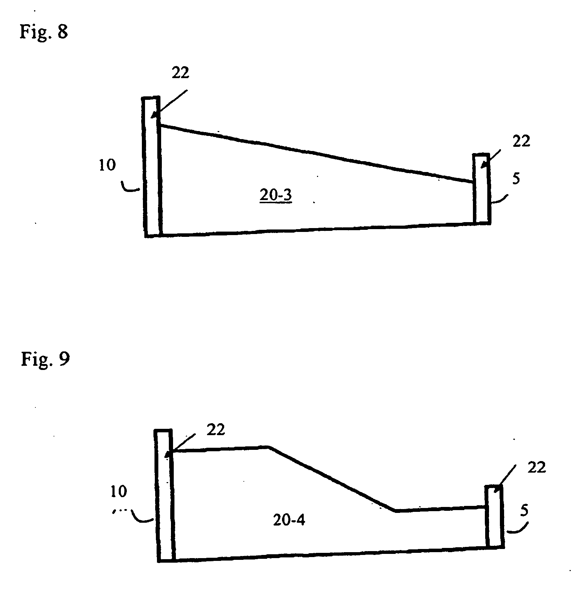

The embodiment according to Fig. 8 is a preform of a sole element which is in particular used for shoes wherein the sole element is to provide additionally a sideways support of the foot. The forming tools used for the manufacture of such sole elements have therefore corresponding recesses into which the preform material is pressed during the press-forming. This is difficult if a preform as for example shown in Fig. 6 is used, since the plastiline preform material has a high viscosity. Therefore, a rim 22 is provided according to the invention at the edge of the preform fitting into a corresponding recess of the tool and leading later to a corresponding rim of the sole element.

The same applies for the embodiment shown in Fig. 9 which corresponds to the embodiment of Fig. 7 with a rim 22 for a sideways support of the foot.

In particular in the context of the preforms 20-3 and 20-4 shown in Fig. 8 and 9, it is apparent that such preforms with complex shapes can only be cut from a pre-expanded block with a high degree of expenditure. For this reason it is according to the invention alternatively provided not to cut or modulate the preform 20 from a pre-expanded block but to manufacture it in a single step in the desired shape. This can, for example, be achieved by producing the preform by injection molding so that a subsequent treatment for the manufacture of the desired thickness distribution is no longer necessary. Such a preformed preform has only to be transformed into a sole element to create the desired density modulation from the thickness modulation.

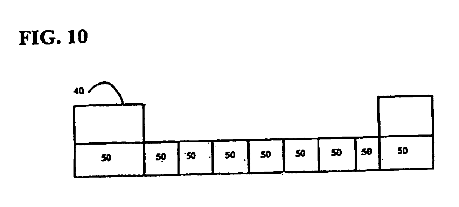

Finally the second method according to the invention for the manufacture of sole elements with a desired density distribution is to be described with reference to Fig. 10.

Fig. 10 shows schematically one half of a forming tool 40 for the manufacture of sole elements. For the sake of clarity, the upper half of the tool is not shown. It is common in the state of the art of forming tools to subject the corresponding preforms in the forming area not only to a pressure but also to heat the preforms for the forming process. However, the prior art uses only tools with a powerful heating which heat up the complete tool to a desired temperature. In the method according to the invention and according to this preferred embodiment, a tool is used which comprises preferably an array of 50 heating elements heating certain elements of the forming surface to a well-defined temperature. Since the preform in the tool expands differently depending on the supplied heat it is possible to differently expand different parts of the preform by a defined control of the heating elements. As a result, different densities and therefore different hardnesses are obtained in different parts of the obtained sole element. The result of this method according to the invention is therefore again a sole element having a locally changing and specifically adapted density distribution.

## Claims

1. Method for the manufacture of sole elements (25) for shoes, in particular for sport shoes, with a desired density distribution in one or more directions comprising the following steps:
a. manufacture of a sole element preform (20; 20-1; 20-2; 20-3; 20-4) of a plastic material with a thickness varying in one or more directions depending on the desired density distribution; and
b. press-forming of the sole element preform (20; 20-1; 20-2; 20-3) in a forming tool to form the finished sole element (25) from the sole element preform (20; 20-1; 20-2; 20-3; 20-4);
c. **characterized in that** the desired density distribution is adjusted so that the density gradually increases from the lateral side (5) of the sole element (25) to the medial side (10).

2. Method according to claim 1, wherein the thickness of the preform varies from the rear foot part (28) to the forefoot part (27).

3. Method according to claim 1 or 2, further comprising the step of supplying heat during the press-forming.

4. Method according to one of the preceding claims, wherein the step of manufacturing the sole element preform (20; 20-1; 20-2; 20-3) comprises the manufacture of the preform (20-1) with a thickness decreasing linearly from the medial side (10) to the lateral side (5).

5. Method according to one of the preceding claims, wherein the step of manufacturing the sole element preform (20; 20-1; 20-2; 20-3) comprises providing a preform (20-3) with a rim (22) of constant thickness.

6. Method according to one of the preceding claims 1 to 5, wherein the step of manufacturing the sole element preform (20; 20-1; 20-2; 20-3) comprises the step of expanding a quadrant-shaped block of a plastic material, preferably EVA, and subsequently cutting the block to obtain the desired thickness distribution.

7. Method according to one of the claims 1 to 5, wherein the step of manufacturing the sole element preform (20; 20-1; 20-2; 20-3) comprises injection molding a preform (20; 20-1; 20-2; 20-3).

## Patentansprüche

1. Verfahren zur Herstellung von Sohlenelementen (25) für Schuhe, insbesondere für Sportschuhe, mit einer gewünschten Dichteverteilung in einer oder in mehreren Richtungen, aufweisend die folgenden Schritte:
a. Herstellen einer Sohlenelement-Vorform (20; 20-1; 20-2; 20-3; 20-4) aus einem Plastikmaterial mit einer Dicke, die in einer oder in mehreren Richtungen variiert, abhängig von der gewünschten Dichteverteilung; und
b. Pressformen der Sohlenelement-Vorform (20; 20-1; 20-2; 20-3) in einem Formwerkzeug, um das fertige Sohlenelement (25) aus der Sohlenelement-Vorform (20; 20-1; 20-2; 20-3; 20-4) herzustellen;
c. **Gekennzeichnet dadurch, dass** die gewünschte Dichteverteilung so angepasst ist, dass die Dichte graduell zunimmt von der lateralen Seite (5) des Sohlenelements (25) zu der medialen Seite (10).

2. Verfahren nach Anspruch 1, wobei die Dicke der Vorform von dem hinteren Fußteil (28) zu dem vorderen Fußteil (27) variiert.

3. Verfahren nach Anspruch 1 oder 2, weiterhin aufweisend den Schritt des Bereitstellens von Wärme während des Pressformens.

4. Verfahren nach einem der vorhergehenden Ansprüche, wobei der Schritt des Herstellens der Sohlenelement-Vorform (20; 20-1; 20-2; 20-3) das Herstellen der Vorform (20-1) mit einer Dicke, die linear von der medialen Seite (10) zu der lateralen Seite (5) abnimmt, aufweist.

5. Verfahren nach einem der vorhergehenden Ansprüche, wobei der Schritt des Herstellens der Sohlenelement-Vorform (20; 20-1; 20-2; 20-3) das Bereitstellen einer Vorform (20-3) mit einem Rand (22) mit konstanter Dicke aufweist.

6. Verfahren nach einem der Ansprüche 1 bis 5, wobei der Schritt des Herstellens der Sohlenelement-Vorform (20; 20-1; 20-2; 20-3) den Schritt des Ausdehnens eines quadrantenförmigen Blocks eines Plastikmaterials, vorzugsweise EVA, und das nachfolgende Schneiden des Blocks, zur Erlangung der gewünschten Dickeverteilung aufweist.

7. Verfahren nach einem der Ansprüche 1 bis 5, wobei der Schritt des Herstellens der Sohlenelement-Vorform (20; 20-1; 20-2; 20-3) das Spritzgießen einer Vorform (20; 20-1; 20-2; 20-3) aufweist.

## Revendications

1. Procédé de fabrication d'éléments de semelle pour des chaussures, en particulier pour des chaussures de sport, avec une distribution de densité souhaitée dans une ou plusieurs directions, comprenant les étapes suivantes :
a. fabrication d'une préforme d'élément de semelle (20 ; 20-1 ; 20-2 ; 20-3 ; 20-4) en une matière plastique avec une épaisseur variant dans une ou plusieurs directions dépendant de la distribution de densité souhaitée ; et
b. formage à la presse de la préforme d'élément de semelle (20 ; 20-1 ; 20-2 ; 20-3) dans un outil de formage pour former l'élément de semelle fini (25) à partir de la préforme d'élément de semelle (20 ; 20-1 ; 20-2 ; 20-3 ; 20-4),
c. **caractérisé en ce que** la distribution de densité souhaitée est ajustée de manière que la densité augmente graduellement depuis le côté latéral (5) de l'élément de semelle (25) jusqu'au côté médian (10).

2. Procédé selon la revendication 1, dans lequel l'épaisseur de la préforme varie depuis la partie de l'arrière du pied (28) jusqu'à la partie de l'avant-pied (27).

3. Procédé selon la revendication 1 ou 2, comprenant en outre l'étape d'application de chaleur pendant le formage à la presse.

4. Procédé selon l'une des revendications précédentes, dans lequel l'étape de fabrication de la préforme d'élément de semelle (20 ; 20-1 ; 20-2 ; 20-3) comprend la fabrication de la préforme (20-1) avec une épaisseur diminuant linéairement depuis le côté médian (10) jusqu'au côté latéral (5).

5. Procédé selon l'une des revendications précédentes, dans lequel l'étape de fabrication de la préforme d'élément de semelle (20 ; 20-1 ; 20-2 ; 20-3) comprend l'obtention d'une préforme (20-3) avec un rebord (22) d'épaisseur constante.

6. Procédé selon l'une des revendications précédentes 1 à 5, dans lequel l'étape de fabrication de la préforme d'élément de semelle (20 ; 20-1 ; 20-2 ; 20-3) comprend l'étape d'expansion d'un bloc en forme de quadrant en matière plastique, de préférence en EVA, puis découpe du bloc pour obtenir la distribution d'épaisseur souhaitée.

7. Procédé selon l'une des revendications 1 à 5, dans lequel l'étape de fabrication de la préforme d'élément de semelle (20 ; 20-1 ; 20-2 ; 20-3) comprend un moulage par injection d'une préforme (20 ; 20-1 ; 20-2 ; 20-3).
